# EUROPEAN PATENT APPLICATION

(11) **EP 2 487 587 A1**
(43) Date of publication of application: **15.08.2012**
(21) Application number: 11305145.2
(22) Date of filing: 11.02.2011
(51) Int. Cl.: G06F 9/445, H04L 12/28, H04L 29/08

(54) **Service gateway, management server and software module**

(71) Applicant: Alcatel Lucent, 75007 Paris (FR)
(72) Inventor: Liekens, Werner, 2860, Sint-Katelijne Waver (BE); De Loof, Jourik, 2630, Aartselaar (BE)
(74) Representative: D'Halleweyn, Nele Veerle Trees Gertrudis

(57) **Abstract**

Service gateway comprising a port for a dongle for enabling certain services, further comprising a management module adapted for communicating through a network with a management server; an event module adapted for detecting the presence of a connected dongle; and for requesting the management module to have the management server install the driver bundle.

## Description

### Field of the invention

The present invention relates to the field of installing a software module or bundle on a service gateway for driving a dongle connected with the service gateway for accessing sensor devices. Particular embodiments of the invention relate to a service gateway, typically a home service gateway, a management server and a software module or bundle, typically a driver bundle, a method for installing a software bundle or module in a service gateway, and programming code for performing steps of such a method.

### State of the art

There exists sensor technology such as ZWave technology which uses a USB dongle for connection with a home service gateway in order to be able to access the sensor devices in the home network. For being able to manage the sensor devices a sensor software bundle must be installed in the home service gateway. Such a software bundle is typically pre-installed.

### Summary

The object of embodiments of the invention is to provide a service gateway, a management server, a software module, a method, and a programming code allowing for a flexible installation of software bundles on service gateways.

According to an embodiment of the invention there is provided a service gateway comprising a port for a dongle for enabling certain services, e.g. enabling the access to certain sensor devices. The service gateway comprises a management module adapted for communicating through a network with a management server.

Further, the service gateway comprises an event module adapted for detecting the connection of a dongle with the service gateway, and for requesting the management module to have the management server install the driver bundle.

In that way a service gateway, e.g. a home service gateway can be very easily made suitable for use with a particular dongle. Pre-installation on the service gateway is avoided and a required driver bundle can be automatically installed in function of the dongle that is plugged into the service gateway.

According to a preferred embodiment the service gateway has a number of USB ports and the dongle is a USB dongle. The dongle can e.g. be any one of the following devices: Bluetooth dongle, ZWave dongle, Zigbee dongle, a KNX device, a Wi-Fi device. Generally a dongle is a device that has an interface for being connected with the service gateway and has some hardware to communicate with a number of devices, e.g. Bluetooth, ZWave or Zigbee sensor devices.

The management module for communicating through a network with the management server is typically an application layer protocol agent capable for remote management of end-user devices. The management module is preferably a TR069 agent but could also be e.g. a Simple Network Management Protocol (SNMP) or an Open Mobile Alliance OMA Device Management (OMADM) agent.

According to a preferred embodiment the event module is further adapted for checking if a driver bundle is installed for the connected dongle, wherein the requesting the management module to have the management server install the driver bundle is performed if said driver bundle is not installed, and preferably only in that case. In that way, when a dongle is connected to the service gateway, it will first be checked by the event module whether a corresponding driver module is installed, and if this is not the case the management module will send a suitable request message to the management server for installing the driver bundle corresponding with the connected dongle.

According to a preferred embodiment the event module is further adapted for storing an identification of the dongle for which a driver bundle has been installed. The identification preferably comprises a product identity, a vendor identity and a serial number. In that way the event module will maintain a list with identifications of dongles associated with installed driver bundles so that it can easily check whether a driver bundle for a particular dongle was previously installed.

According to a preferred embodiment an operating system is installed on the service gateway. The operating system is arranged for detecting the dongle and communicating a corresponding event including an identification of said dongle to the event module. The event module is then adapted to detect the presence of a connected dongle by listening to the communicated events and to obtain the identification coupled with the event. The operating system could e.g. be OS Linux with an OSGi/JVM framework or with an Android/JVM framework.

According to a typical embodiment, the service gateway further comprises one or more installed driver bundles, a sensor abstraction module adapted to communicate with the one or more installed driver bundles, and one or more applications capable of communicating with the sensor abstraction module for using the connected dongle. In that way the applications can access e.g. sensor devices in the home network through the connected dongle.

An embodiment of the invention relates to a driver bundle for use in a service gateway for driving a dongle having an identification. The driver bundle is adapted for installation on the service gateway and for, upon installation thereof, communicating an identification of the corresponding dongle to the event module. In that way the event module is kept up to date of the installed driver bundles.

A preferred embodiment of the driver bundle is for use in a service gateway having an operating system installed thereon, wherein the driver module is further adapted for receiving an "UP" message from the operating system when a connected dongle is detected, and for receiving a "DOWN" message when a dongle is removed.

Further, the invention relates to a management server. According to an embodiment the server comprises a control module adapted for receiving a request from a service gateway for installing a driver bundle of a particular dongle; for consulting a database with driver bundles for dongles and for selecting the requested driver bundle; and for sending the selected driver bundle to the service gateway for installation thereon. The control module is preferably further adapted for receiving a request from a service gateway containing an identification of a dongle connected with the service gateway and for selecting in the database the driver bundle corresponding with said identification. The identification preferably comprises a product identity, a vendor identity and a serial number. In that way the control module will be able to access a database with identifications of dongles and associated driver bundles and obtain the driver bundle corresponding with the identification received from the service gateway.

Further, the invention relates to a method for installing a driver bundle for a dongle in a service gateway. An embodiment of the method comprises the following steps performed at the service gateway: detecting that a dongle is connected to the service gateway; sending of a request for installation of a driver bundle associated with the connected dongle to a management server through a network; and receiving said driver bundle from said management server. Preferably the method also comprises checking whether a driver bundle corresponding with said dongle is installed on said service gateway and performing the sending of a request if the driver bundle is not installed.

An embodiment of the method may further comprise installing the received driver bundle and storing an identification dongle corresponding with the installed driver bundle on the service gateway. The detecting may then comprise receiving an identification from the connected dongle, and the checking may then comprise verifying whether said identification has been stored.

Finally the invention relates to a programming code for installation on a service gateway for performing the detecting and/or the checking step of embodiments of the method disclosed above.

### Brief description of the figures

The accompanying drawings are used to illustrate presently preferred non-limiting exemplary embodiments of the present invention. The above and other advantages, features and objects of the invention will become more apparent, and the invention will be better understood from the following detailed description when read in conjunction with the accompanying drawings, in which:
Figure 1 is a schematic view of a network environment in which embodiments of the service gateway and the management server according to the present invention are used;
Figure 2 is a schematic diagram of a part of an embodiment of the service gateway for illustrating the operation of an embodiment of a driver bundle according to the invention.

In existing home networks there can be provided sensor devices which can be accessed through USB dongles connected to the home service gateway. If a user buys a new sensor technology, e.g. ZWave, Zigbee, or Bluetooth, it comes with a USB dongle that can make access to a sensor device of that technology in the home network. According to an embodiment of the invention there is provided a zero-touch installation of software modules for the sensor technology on the home service gateway (HSG) based on the USB event notification. Such an event notification will typically use an identification of the USB dongle which may comprise the parameters deviceID, productID and serial number of the USB dongle.

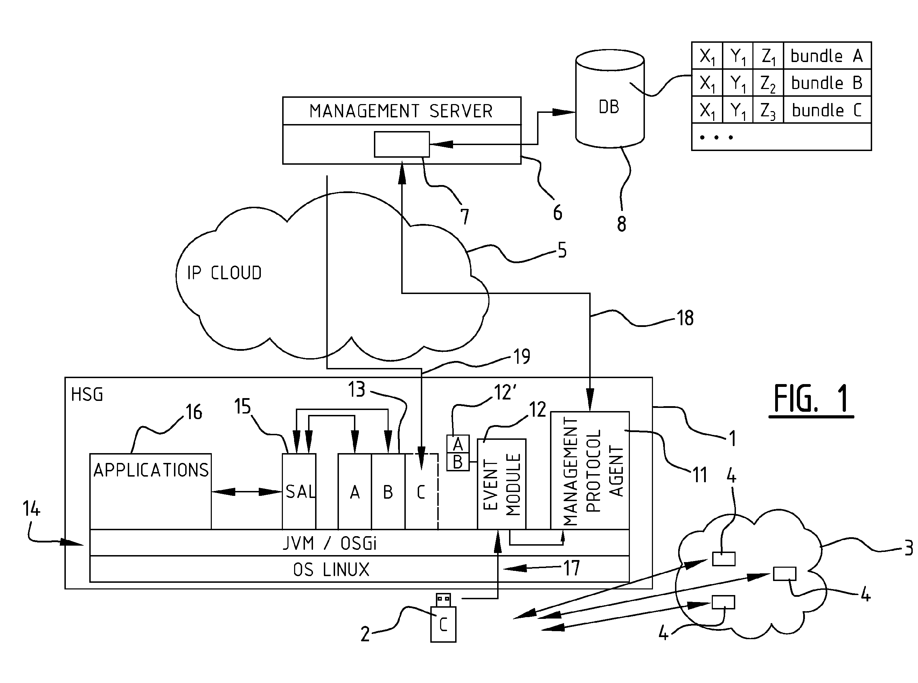

Now an embodiment of such a home service gateway will be illustrated with reference to figure 1. The home service gateway (HSG) 1 comprises a port (not shown) for connecting a dongle 2 in order to be able to access sensor devices 4 in a home network 3 through the dongle 2. The dongle is e.g. a Bluetooth dongle, a ZWave dongle, a Zigbee dongle, a KNX device, a Wi-Fi device. The HSG 1 can be a home networking device used as a gateway to connect devices in the home to the Internet or other WAN with the possibility to enable services in the home, e.g. domotica services, etc.

The HSG 1 comprises a management module 11, e.g. a TR069 Agent, for communicating through an IP network 5 with a management server 6. The TR-069 Remote Management Protocol consists of an object-model on which Remote Procedure Calls are invoked. TR-069 defines through the usage of Remote Procedure Calls, a generic mechanism by which the management server 6, also called Home Device Manager (HDM), can read or write parameters to configure a CPE and monitor CPE status and statistics.

The HSG 1 also comprises a USB event module 12 for detecting the presence of a connected dongle through the operating system 14, see arrow 17, for checking if a driver bundle is installed for the connected dongle, and for requesting the management module 11 to have the management server 6 install the driver bundle associated with the connected dongle, see arrows 18 and 19, if the driver bundle is not installed. In the illustrated example driver bundles 13 associated with dongles A, B had previously been installed and a driver bundle associated with dongle C is in the process of being installed.

An operating system 14 is installed on the service gateway and the operating system is arranged for detecting the dongle and communicating a corresponding event including an identification of the connected dongle 2 to the event module 11, see arrow 17. The operating system is e.g. a Linux operating system or an Android operating system provided with an OSGi framework. The OSGi framework is a module system and service platform for the Java programming language that implements a complete and dynamic component model. Applications or components (coming in the form of bundles for deployment) can be remotely installed, started, stopped, updated and uninstalled without requiring a reboot.

The HSG1 further comprises a sensor abstraction module or layer (SAL) 15 adapted to communicate with the one or more installed driver bundles 13, and one or more applications 16 capable of communicating with the sensor abstraction module 15 for using the connected dongle(s) 2.

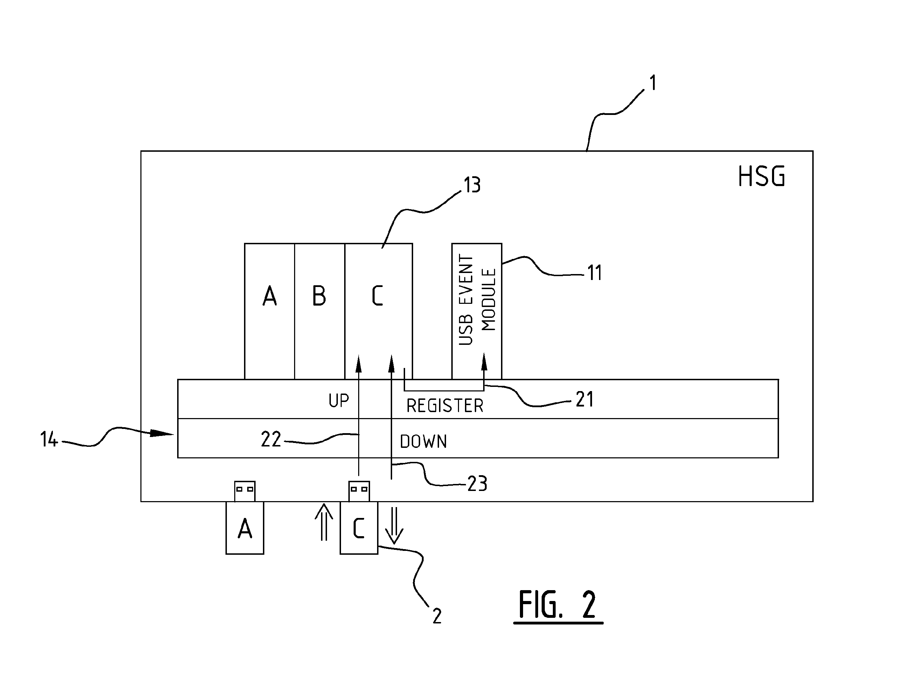

Now the operation of the HSG 1 of figure 1 will be explained in more detail. The HSG 1 is installed at the premises of the user and it is assumed that the management agent 11 is up and running with connection to the management server 7 through the IP cloud 5. The event module 12 is up and running listing to USB events of the OS 14. For facilitating the understanding it is assumed that a user has bought a home e-health system and this system is going to be managed by a telecom operator. The home e-health system exists out of Bluetooth dongle and weight scale. Note that the steps below apply also for any type of other dongle for other applications and that this example is merely given for illustrating purposes. The operation is as follows:
- The user plugs the Bluetooth USB dongle 2 into the HSG 1.
- The OS 14 on HSG 1 detects that there is a new USB device 2 connected.
- The event module 12 is listening to USB events coming from the OS 14, see arrow 17; the event module 12 is a bundle or application installed on the OSGi framework on HSG 1.
- The event module 12 fetches the vendor ID x, product ID y and serial number z from the USB dongle 2 through the OS 14.
- The event module 12 checks if there is a supporting Driver Bundle for dongle C running on the OSGi framework. This can e.g. be done by consulting a list 12' with identifications of dongles for which a driver bundle is installed. In the example this is shown schematically as a list containing A and B, but typically this list will include for each installed bundle a product ID, vendor ID and serial number. If the fetched identification of dongle C (vendor ID, product ID and serial number) is in the list, a notification is send to the Driver Bundle to start the latter, see also figure 2.
- If fetched identification of dongle C (vendor ID x, product ID y and serial number z) is not in the list, the event module 12 sends a notification to the management agent 11 with the parameters product ID x, vendor ID y, and serial number z.
- Next the management agent 11 sends the parameters to management server 6. The management server 6 has a control module 7 for checking in a database 8 which driver bundle is best for parameters driver ID x, vendor ID y and serial number z. If a suitable driver bundle is not found an error message is sent back to HSG 1. If the driver bundle (here bundle C, i.e. the bundle suitable for dongle C) is found, the management server 6 is going to install this driver bundle and will start it on the HSG 1, see arrow 19 and bundle C indicated in dotted lines in the HSG 1.
- When the driver bundle is started on the HSG 1, the sensor network can be managed by the SAL 15. Applications deployed on the HSG 1 or applications in the network can now access the sensor network 3.

Figure 2 further illustrates the behaviour of an installed driver bundle C in the HSG 1. Upon installation of the driver bundle C an identification of the corresponding dongle, typically the parameters x, y, z as defined above, are communicated to the event module 11, see arrow 21. Further the driver module C is preferably adapted for receiving an "UP" message from the operating system 14 when a connected dongle is detected, wherein this "UP" message typically contains the port on which the dongle is mapped, see arrow 22, in order to start the dongle. Further the driver module is typically adapted for receiving a "DOWN" message when a dongle is removed, see arrow 23, in order to stop the driver module.

While the principles of the invention have been set out above in connection with specific embodiments, it is to be clearly understood that this description is merely made by way of example and not as a limitation of the scope of protection which is determined by the appended claims.

## Claims

1. Service gateway comprising a port for a dongle for enabling certain services, further comprising:
- a management module adapted for communicating through a network with a management server;
- an event module adapted for detecting the presence of a connected dongle; and for requesting the management module to have the management server install the driver bundle.

2. Service gateway of claim 1, wherein said port is a USB port and said dongle is a USB dongle.

3. Service gateway of any of the previous claims, wherein the event module is further adapted for checking if a driver bundle is installed for the connected dongle; and for requesting the management module to have the management server install the driver bundle if the result of said checking is that said driver bundle is not installed.

4. Service gateway according to any of the previous claims, wherein the event module is adapted for storing an identification of the dongle for which a driver bundle has been installed in a database, wherein said identification preferably comprises a product identity, a vendor identity and a serial number.

5. Service gateway of any of the previous claims, wherein an operating system is installed on the service gateway, said operating system being arranged for detecting the dongle and communicating a corresponding event including an identification of said dongle, and wherein the event module is adapted to detect the presence of a connected dongle by listening to the communicated events and to obtain the identification coupled with the event.

6. Service gateway of any of the previous claims, wherein the dongle is any one of the following: Bluetooth dongle, ZWave dongle, Zigbee dongle, a KNX device, a Wi-Fi device.

7. Service gateway of any of the previous claims, wherein the service gateway further comprises one or more installed driver bundles, a sensor abstraction module adapted to communicate with the one or more installed driver bundles, and one or more applications capable of communicating with the sensor abstraction module for using the connected dongle.

8. Driver bundle for use in a service gateway for driving a dongle having an identification, said driver bundle being adapted for installation on the service gateway and for, upon installation thereof, communicating an identification of the corresponding dongle to the event module.

9. Driver bundle according to claim 8 for use in a service gateway having an operating system installed thereon, wherein the driver module is further adapted for receiving a "UP" message from the operating system when a connected dongle is detected, and for receiving a "DOWN" message when a dongle is removed.

10. Management server comprising:
- a control module adapted for receiving a request from a service gateway for installing a driver bundle of a particular dongle; for consulting a database with driver bundles for dongles and for selecting the requested driver bundle; and for sending the selected driver bundle to the service gateway for installation thereon.

11. Management server of claim 10, wherein the control module is further adapted for receiving a request from a service gateway containing an identification of a dongle connected with the service gateway and for selecting in the database the driver bundle corresponding with said identification.

12. System comprising the management server of claim 10 or 11, and the database with driver bundles for dongles, each dongle having a dongle identification, wherein for each dongle identification there is stored a link to a corresponding driver bundle.

13. Method for installing a driver bundle for a dongle in a service gateway, comprising at said service gateway:
- detecting that a dongle is connected to the service gateway;
- checking whether a driver bundle corresponding with said dongle is installed on said service gateway;
- if said driver bundle is not installed, sending of a request for installation to a management server through a network; and
receiving said driver bundle from said management server.

14. Method of claim 13, further comprising installing the received driver bundle and storing an identification dongle corresponding with the installed driver bundle, wherein the detecting comprises receiving an identification from the connected dongle, and wherein the checking comprises verifying whether said identification has been stored.

15. Programming code for installation on a service gateway for performing the detecting and the checking step of the method of claim 13 or 14.
